# EUROPEAN PATENT APPLICATION

(11) **EP 4 410 926 A1**
(43) Date of publication of application: **07.08.2024**
(21) Application number: 22876404.9
(22) Date of filing: 28.09.2022
(51) Int. Cl.: C09K 5/10, C09K 5/14

(54) **THERMALLY CONDUCTIVE COMPOSITION AND THERMALLY CONDUCTIVE MEMBER**

(30) Priority: 29.09.2021 JP 2021160135
(71) Applicant: Sekisui Polymatech Co., Ltd., Saitama-city, Saitama 338-0837 (JP)
(72) Inventor: KITADA, Gaku, Saitama-city, Saitama 338-0837 (JP)
(74) Representative: Ter Meer Steinmeister & Partner
(86) International application number: PCT/JP2022/036315
(87) International publication number: WO 2023/054538

(57) **Abstract**

A thermally conductive composition of the present invention is a composition in a liquid form at 25°C comprising an organopolysiloxane, a thermally conductive filler, and an ester compound having 12 to 28 carbon atoms. According to the present invention, it is possible to provide a thermally conductive composition, which has good workability because of its low viscosity, excellent heat resistance, and in which a low-molecular weight siloxane does not tend to be generated.

## Description

### Technical Field

The present invention relates to a thermally conductive composition and a thermally conductive member.

### Background Art

A cured product formed by filling a thermally conductive composition between a heating element and a heat sink and then curing it has been used as a thermally conductive member that transfers heat generated from the heating element to the heat sink. The thermally conductive composition can fill an arbitrary gap between the heating element and the heat sink because it has fluidity. Therefore, the thermally conductive member to be formed can reliably fill the gap even if the gap between the heating element and the heat sink is not constant, and has been used as a thermally conductive gap filler.

For example, as disclosed in PTL 1, it has been known that the thermally conductive member is used as the gap filler for a battery module. The thermally conductive member is arranged between a battery cell which is the heating element and a module housing which is the heat sink, and fulfills a role of dissipating the heat of the battery cell to the outside. It is also used for arranging between the battery cells to fix them in place and keeping a clearance state.

As thermally conductive compositions for forming the thermally conductive member, those including an organopolysiloxane and a thermally conductive filler are more often used. In general, to improve heat dissipation, it is necessary to increase a content of the thermally conductive filler, but if the content of the thermally conductive filler is increased, viscosity of the thermally conductive composition becomes high, to make it worse to handle. Therefore, various studies have been conducted to lower the viscosity of the thermally conductive composition.

To make the thermally conductive composition lower in viscosity, examples include a method of using a low viscosity organopolysiloxane or a plasticizer such as a dimethyl silicone oil, a method of blending a dispersant having a viscosity lowering effect, and a method of devising surface treatments of the thermally conductive filler, combinations of shapes and particle sizes of the thermally conductive filler, and the like.

For example, in PTL 2, described are an invention relating to a thermally conductive sheet comprising: a matrix composed of an organopolysiloxane; a thermally conductive filler; and a silicon compound selected from the group consisting of alkoxysilane compounds and alkoxysiloxane compounds; and that the viscosity of the thermally conductive composition can be lowered by using such a silicon compound as the dispersant.

### Citation List

### Patent Literature

PTL 1: WO 2018/173 860
PTL 2: WO 2019/004150

### Summary of Invention

### Technical Problem

However, in case of using a large amount of the plasticizer such as a low viscosity dimethyl silicone oil, a low-molecular weight siloxane tends to be generated by heating, and thus there is concern that electrical troubles may occur. In addition, in case of using a large amount of the dispersant such as the alkoxysilane compound, it is likely to volatilize easily, and heat resistance may not be sufficiently maintained in some cases.

Therefore, an objection of the present invention is to provide a thermally conductive composition comprising an organopolysiloxane and a thermally conductive filler, which has good workability because of its low viscosity, excellent heat resistance, and in which the low-molecular weight siloxane does not tend to be generated, and a thermally conductive member which is a cured product thereof.

### Solution to Problem

As a result of intensive studies, the present inventor has found that the above problems can be solved by a thermally conductive composition in a liquid form at 25°C comprising an organopolysiloxane, a thermally conductive filler, and an ester compound having 12 to 28 carbon atoms, and have completed the present invention.

More specifically, the present invention provides the following [1] to [8].
[1] A thermally conductive composition in a liquid form at 25°C comprising an organopolysiloxane, a thermally conductive filler, and an ester compound having 12 to 28 carbon atoms.
[2] The thermally conductive composition according to the above [1], wherein the ester compound is a monoester in a liquid form at 25°C.
[3] The thermally conductive composition according to the above [1] or [2], wherein the ester compound is represented by the following Formula (1): 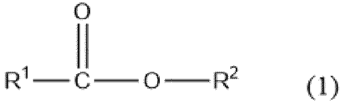 wherein R¹ and R² are alkyl groups, and at least one of R¹ and R² is an alkyl group having 10 or more carbon atoms.
[4] The thermally conductive composition according to any one of the above [1] to [3], wherein the organopolysiloxane is an organopolysiloxane containing a reactive group.
[5] The thermally conductive composition according to the above [4], wherein the organopolysiloxane containing a reactive group is an addition reaction-curable silicone comprising an alkenyl group-containing organopolysiloxane and a hydrogenorganopolysiloxane.
[6] The thermally conductive composition according to any one of the above [1] to [5], wherein the thermally conductive composition has a viscosity of 1 to 500 Pa·s.
[7] A thermally conductive member comprising a silicone matrix, a thermally conductive filler, and an ester compound having 12 to 28 carbon atoms.
[8] A battery module comprising a gap filler composed of the thermally conductive member according to the above [7], a plurality of battery cells, and a module housing for storing the plurality of the battery cells, wherein the gap filler is arranged inside the module housing.

### Advantageous Effects of Invention

According to the present invention, it is possible to provide a thermally conductive composition, which has good workability because of its low viscosity, excellent heat resistance, and in which a low-molecular wight siloxane does not tend to be generated, and a thermally conductive member which is a cured product thereof.

### Brief Description of Drawings

[Fig. 1] Fig. 1 is a diagrammatic perspective view showing a typical configuration of a battery module.
[Fig. 2] Fig. 2 is a diagrammatic perspective view showing a typical configuration of a battery cell contained in the battery module.

### Description of Embodiments

### [Thermally Conductive Composition]

Hereinafter, a thermally conductive composition of the present invention will be described in detail.

The thermally conductive composition of the present invention comprises an organopolysiloxane, a thermally conductive filler, and an ester compound having 12 to 28 of carbon atoms, and is a composition in a liquid form at 25°C.

Herein, a liquid form at 25°C means that it has fluidity at 25°C, and includes a pasty one.

### <Ester Compound>

The thermally conductive composition of the present invention includes the ester compound having 12 to 28 carbon atoms. Including the ester compound allows a lower viscosity of the thermally conductive composition to provide it better handleabilities, such as applicability. The reason why the viscosity of the thermally conductive composition is lowered is not certain, but it is considered that the ester compound having 12 to 28 carbon atoms is excellent in compatibility with the organopolysiloxane, and as a result, the viscosity is lowered. Further, since the ester compound to be blended has a specific number of carbon atoms and does not reduce heat resistance of the thermally conductive composition, the heat resistance of the thermally conductive composition can be good.

Furthermore, unlike methods of lowering the viscosity using a large amount of a plasticizer such as a dimethyl silicone oil, even if the ester compound in the present invention is used, there is no increase in an amount of a low-molecular weight siloxane generated.

In the present description, a range indicated by "to" means a range from a predetermined numeral or more to a predetermined numeral or less described before and after "to."

Number of carbon atoms of the ester compound in the present invention is 12 to 28. When the number of carbon atoms of the ester compound is less than 12, the heat resistance of the thermally conductive composition is likely to be reduced. When the number of carbon atoms of the ester compound is more than 28, the compatibility with the organopolysiloxane is decreased and the viscosity of the thermally conductive composition becomes difficult to be lowered. From a viewpoint of improving the heat resistance of the thermally conductive composition, and a viewpoint of increasing the compatibility with the organopolysiloxane to lower the viscosity of the thermally conductive composition, the number of carbon atoms of the ester compound is preferably 13 or more, more preferably 17 or more, and preferably 26 or less, more preferably 24 or less, even more preferably 22 or less. Also, the number of carbon atoms of the ester compound is preferably 13 to 26, more preferably 17 to 24, even more preferably 13 to 22.

In addition, from the viewpoint of improving the heat resistance of the thermally conductive composition, and from the viewpoint of increasing the compatibility with the organopolysiloxane to lower the viscosity of the thermally conductive composition, a molecular weight of the ester compound is preferably 200 or more, more preferably 210 or more, even more preferably 270 or more, and preferably 430 or less, more preferably 400 or less, even more preferably 370 or less, still more preferably 340 or less. Also, the molecular weight of the ester compound is preferably 200 to 430, more preferably 210 to 400, even more preferably 270 to 370, still more preferably 270 to 340.

The above ester compound is a compound containing an ester group, and may be a monoester containing one ester group, or one containing two or more ester groups such as diester, but from the viewpoint of lowering the viscosity of the thermally conductive composition, and from the viewpoint of improving the heat resistance, it is preferably the monoester, and more preferably the monoester in a liquid form at 25°C.

Among them, from the viewpoint of lowering the viscosity of the thermally conductive composition, and from the viewpoint of improving the heat resistance, it is preferable that the ester compound is a compound represented by the following Formula (1). 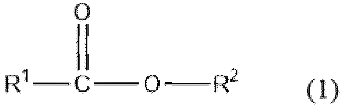 wherein R¹ and R² are alkyl groups, and at least one of R¹ and R² is an alkyl group having 10 or more carbon atoms.

In Formula (1), R¹ and R² are alkyl groups, and at least one of R¹ and R² is the alkyl group having 10 or more carbon atoms. Since the ester compound of the present invention has 12 to 28 carbon atoms, the total numbers of carbon atoms of R¹ and R² in Formula (1) are 11 to 27.

In formula (1), R¹ and R² are each the alkyl group, which may be a linear alkyl group or a branched alkyl group.

At least one of R¹ and R² is the alkyl group having 10 or more carbon atoms, and it is preferable that only one of R¹ and R² is the alkyl group having 10 or more carbon atoms. This reduces effects of polarity of the ester group and makes it easier to be compatible with the organopolysiloxane. Herein, it is preferable that when only one of R¹ and R² is an alkyl group having 10 or more carbon atoms, the other has 9 or less carbon atoms.

In addition, from the viewpoint of improving the compatibility of the ester compound with the organopolysiloxane, it is preferable that both R¹ and R² are an alkyl groups having 18 or less carbon atoms. It is also preferable that at least one of R¹ and R² is an alkyl group having 10 to 18 carbon atoms. It is also preferable that only one of R¹ and R² is an alkyl group having 10 to 18 carbon atoms, and the other is one having 1 to 9 carbon atoms.

R¹ is preferably an alkyl group having 10 or more carbon atoms, more preferably an alkyl group having 11 or more carbon atoms, and preferably an alkyl group having 15 or less carbon atoms. R¹ is also preferably an alkyl group having 10 to 15 carbon atoms, more preferably an alkyl group having 11 to 15 carbon atoms.

R² is preferably an alkyl group having 2 or more carbon atoms, more preferably an alkyl group having 3 or more carbon atoms, and preferably an alkyl group having 16 or less carbon atoms, more preferably an alkyl group having 12 or less carbon atoms, even more preferably an alkyl group having 8 or less carbon atoms. R² is also preferably an alkyl group having 2 to 16 carbon atoms, more preferably an alkyl group having 3 to 12 carbon atoms, even more preferably an alkyl group having 3 to 8 carbon atoms.

When R¹ and R² are alkyl groups having such numbers of carbon atoms, it is easier to improve the heat resistance while lowering the viscosity of the thermally conductive composition.

As the ester compounds in the present invention, the compounds described above can be used without limitation, but specific examples include myristyl 2-ethylhexanoate, cetyl 2-ethylhexanoate, stearyl 2-ethylhexanoate, octyl decanoate, decyl decanoate, lauryl decanoate, myristyl decanoate, methyl laurate, ethyl laurate, propyl laurate, isopropyl laurate, butyl laurate, isobutyl laurate, pentyl laurate, hexyl laurate, heptyl laurate, octyl laurate, 1-methylheptyl laurate, 2-ethylhexyl laurate, nonyl laurate, decyl laurate, methyl myristate, ethyl myristate, propyl myristate, isopropyl myristate, butyl myristate, isobutyl myristate, pentyl myristate, hexyl myristate, heptyl myristate, octyl myristate, 1-methylheptyl myristate, 2-ethylhexyl myristate, nonyl myristate, decyl myristate, methyl palmitate, ethyl palmitate, propyl palmitate, isopropyl palmitate, butyl palmitate, isobutyl palmitate, pentyl palmitate, hexyl palmitate, heptyl palmitate, octyl palmitate, 1-methylheptyl palmitate, 2-ethylhexyl palmitate, nonyl palmitate, decyl palmitate, methyl stearate, ethyl stearate, propyl stearate, isopropyl stearate, butyl stearate, isobutyl stearate, pentyl stearate, hexyl stearate, heptyl stearate, octyl stearate, 1-methylheptyl stearate, 2-ethylhexyl stearate, nonyl stearate, decyl stearate, methyl isostearate, ethyl isostearate, propyl isostearate, isopropyl isostearate, butyl isostearate, isobutyl isostearate, pentyl isostearate, hexyl isostearate, heptyl isostearate, octyl isostearate, 1-methylheptyl isostearate, 2-ethylhexyl isostearate, nonyl isostearate, decyl isostearate.

Among these, as the ester compounds, the octyl laurate, the 1-methylheptyl laurate, the isopropyl myristate, the 1-methylheptyl myristate, the isopropyl palmitate, etc. are preferable.

A content of the ester compound in the thermally conductive composition of the present invention is not limited, but is preferably 5 to 80 parts by mass, more preferably 10 to 60 parts by mass, even more preferably 20 to 40 parts by mass, with respect to 100 parts by mass of the organopolysiloxane. The contents of the ester compound at these lower limits or more allow the viscosity of the thermally conductive composition to be easily lowered. The contents of the ester compound at these upper limits or less allow to improve the heat resistance of the thermally conductive composition and curing is difficult to be inhibited, making it easier to obtain a cured product with desired properties.

### <Organopolysiloxane>

The organopolysiloxane included in the thermally conductive composition of the present invention is a base material in a liquid form at 25°C in which the thermally conductive filler is dispersed. In addition, the organopolysiloxane may be, e.g., an organopolysiloxane containing a reactive group or an organopolysiloxane not containing a reactive group, but preferably the organopolysiloxane containing the reactive group.

The organopolysiloxane containing the reactive group is an organopolysiloxane containing a reactive group capable of forming a crosslinked structure, and examples include an addition reaction-curable silicon, a radical reaction-curable silicone, a condensation reaction-curable silicone, an UV or electron beam-curable silicone, and a moisture-curable silicone. Among these, the addition reaction-curable silicone is preferable as the organopolysiloxane containing the reactive group.

The addition reaction-curable silicone is preferably one including an alkenyl group-containing organopolysiloxane (base agent) and a hydrogeneorganopolysiloxane (curing agent).

The above alkenyl group-containing organopolysiloxane is preferably an organopolysiloxane containing at least two alkenyl groups in one molecule. The alkenyl groups are not limited, but include those having 2 to 8 carbon atoms, such as a vinyl group, an allyl group, a butenyl group, a pentenyl group, a hexenyl group, a heptenyl group, and an octenyl group. The alkenyl group-containing organopolysiloxane can be used alone or in combination of two or more.

The above hydrogeneorganopolysiloxane is preferably a hydrogeneorganopolysiloxane containing at least two hydrosilyl groups in one molecule. The hydrosilyl group means a hydrogen atom bonded to a silicon atom (SiH group). The hydrogeneorganopolysiloxane can be used alone or in combination of two or more.

The addition reaction-curable silicone reacts and cures by addition reaction to form a silicone matrix composed of silicone rubber. Since the silicone rubber is easily subjected to compressive deformation, the cured product formed from the thermally conductive composition of the present invention is easy to be assembled between a heating element and a heat sink.

The viscosity at 25°C of the organopolysiloxane in the present invention is preferably 50 to 2,000 cs, more preferably 100 to 1,000 cs. The viscosity of the organopolysiloxane at these lower limits or more allows to be easier to suppress generation of the low-molecular weight siloxane. The viscosity of the organopolysiloxane at these upper limits or less allows to be easier to improve workability, such as when applying the thermally conductive composition.

Herein, the viscosity of the organopolysiloxane is measured by using Rheometer MCR-302e produced by Anton Paar GmbH, with a sample temperature adjusted to 25°C by a Peltier plate, at a condition of a shear rate of 10 (1/sec) using a cone plate system of 50 mm in diameter and 1° in angle.

### <Thermally Conductive Filler>

The thermally conductive composition of the present invention includes the thermally conductive filler. Including the thermally conductive filler improves the thermal conductivity of the thermally conductive composition and the thermally conductive member obtained from the thermally conductive composition.

Examples of the thermally conductive filler include, e.g., metal, metal oxide, metal nitride, metal hydroxide, a carbon material, and oxide, nitride, and carbide other than the metal, etc. Further, examples of a shape of the thermally conductive filler include a sphere, an irregular form, etc. in the powder.

In the thermally conductive filler, examples of the metal include aluminum, copper, nickel, etc.; examples of the metal oxide include aluminum oxide as typified by alumina, magnesium oxide, zinc oxide, etc.; and examples of the metal nitride include aluminum nitride and the like. Examples of the metal hydroxide include aluminum hydroxide. Furthermore, examples of the carbon material include spherical graphite, diamonds and the like. Examples of the oxide, the nitride, and the carbide other than the metal include quartz, boron nitride, silicon carbide, etc. Among these, as the thermally conductive filler, the aluminum oxide and the aluminum hydroxide are preferable, and it is preferable that the aluminum oxide and the aluminum hydroxide are used in combination.

An average particle size of the thermally conductive filler is preferably 0.1 to 200 µm, more preferably 0.3 to 100 µm, even more preferably 0.5 to 70 µm.

As to the thermally conductive filler, it is preferable that a small particle size thermally conductive filler having 0.1 µm or more and 5 µm or less of the average particle size and a large particle size thermally conductive filler having more than 5 µm and 200 µm or less of the average particle size are used in combination. Using the thermally conductive fillers having a different average particle size can increase a filling rate.

Further, the average particle size of the thermally conductive filler can be measured through observation with an electron microscope or the like. More specifically, the particle sizes of 50 arbitrary particles of the thermally conductive filler are measured by using, e.g., the electron microscope or an optical microscope, and an average value thereof (an arithmetic average value) can be adopted as the average particle size.

A content of the thermally conductive filler is preferably 150 to 3,000 parts by mass, more preferably 300 to 2,000 parts by mass, even more preferably 600 to 1,200 parts by mass, with respect to 100 parts by mass of the organopolysiloxane.

The content of the thermally conductive filler at the above lower limit or more allows a certain level of thermally conductive properties to be imparted to the thermally conductive composition and the thermally conductive member. The content of the thermally conductive filler at the above upper limit or less allows the thermally conductive filler to be appropriately dispersed. This can also prevent the viscosity of the thermally conductive composition from becoming higher than necessary.

### <Silicon Compound>

The thermally conductive composition of the present invention may include at least one silicon compound selected from the group consisting of alkoxysilane compounds and alkoxysiloxane compounds. Including such a silicon compound allows the viscosity of the thermally conductive composition to be easily lowered.

Examples of the alkoxysilane compounds include methyltrimethoxysilane, dimethyldimethoxysilane, diethyldimethoxysilane, trimethylmethoxysilane, methyltriethoxysilane, dimethyldiethoxysilane, ethyltrimethoxysilane, n-propyltrimethoxysilane, di-n-propyldimethoxysilane, di-n-propyldiethoxysilane, isobutyltrimethoxysilane, isobutyltriethoxysilane, isobutyltrimethoxysilane, isobutyltriethoxysilane, n-hexyltrimethoxysilane, n-hexyltriethoxysilane, methylcyclohexyldimethoxysilane, methylcyclohexyldiethoxysilane, n-octyltrimethoxysilane, n-octyltriethoxysilane, n-decyltrimethoxysilane, n-decyltriethoxysilane. Among these, from the viewpoint of lowering the viscosity of the thermally conductive composition, the n-decyltrimethoxysilane, the dimethyldimethoxysilane, and the n-octyltriethoxysilane are preferable and the n-decyltrimethoxysilane is more referable.

Examples of the alkoxysiloxane compounds include a methylmethoxysiloxane oligomer, a methylphenylmethoxysiloxane oligomer, a methylepoxymethoxysiloxane oligomer, a methylmercaptomethoxysiloxane oligomer, and a methylacryloylmethoxysiloxane oligomer.

One or more types of silicon compounds may be used.

When the silicon compound is used for the thermally conductive composition, a content of the silicon compound is preferably 0.1 part by mass or more, more preferably 0.5 parts by mass or more, and preferably 5 parts by mass or less, more preferably 3 parts by mass or less, even more preferably 2 parts by mass, with respect to 100 parts by mass of the organopolysiloxane. Also, the content of the silicon compound is preferably 0.1 to 5 parts by mass, more preferably 0.5 to 5 parts by mass, even more preferably 0.5 to 2 parts by mass, with respect to 100 parts by mass of the organopolysiloxane. The contents of the silicon compound at these lower limits or more allow the viscosity of the thermally conductive composition to be easily lowered. On the other hand, the contents of the silicon compound at these upper limits or less allow suppression of reduction in the heat resistance of the thermally conductive composition.

Further, since the thermally conductive composition of the present invention can have a lowered viscosity by blending a specific ester compound as described above, in the case of using the silicon compound, its content is preferably small from the viewpoint of improving the heat resistance.

### <Silicone Oil>

The thermally conductive composition of the present invention may include a silicone oil from the viewpoint of lowering the viscosity. Examples of the silicone oil include a straight silicone oil such as a dimethyl silicone oil and a methyl phenyl silicone oil.

Since the low-molecular weight siloxane tends to occur when a large amount of a low viscosity silicone oil is blended, an amount of the silicone oil blended is preferably 5 parts by mass or less, more preferably 2 parts by mass or less, even more preferably 0 part by mass, with respect to 100 parts by mass of the organopolysiloxane. Herein, the low viscosity silicone oil is, e.g., a silicone oil having a viscosity of 50 cs or less at 25°C, a silicone oil having a viscosity of 30 cs or less at 25°C, or a silicone oil having a viscosity of 20 cs or less at 25°C.

Particularly, it is preferable that the silicone oil having a viscosity of 20 cs or less at 25°C is not included. This makes it easier to suppress the generation of the low-molecular weight siloxane. The viscosity of silicone oil is measured by using Rheometer MCR-302e produced by Anton Paar GmbH, with a sample temperature adjusted to 25°C by a Peltier plate, at a condition of a shear rate of 10 (1/sec) using a cone plate of 50 mm in diameter and 1° in angle.

In the thermally conductive composition of the present invention, various additives can be included. Examples include a catalyst, a flame retardant, an antioxidant, and a colorant.

### <Viscosity>

The viscosity of the thermally conductive composition can be, e.g., 1,000 Pa·s or less. It is also preferably 1 to 500 Pa·s, more preferably 10 to 200 Pa·s, particularly preferably 50 to 150 Pa·s. Since the thermally conductive composition of the present invention includes a specific ester compound blended, the viscosity of the thermally conductive composition can be easily adjusted to a range described above, thereby improving workabilities, such as applicability.

Herein, the viscosity of the thermally conductive composition is measured by a rotational viscometer at a condition of 10 rpm of a rotation speed and 25°C.

A form of the thermally conductive composition of the present invention may be any of a one-component type, or a two-component type in which a first agent and a second agent are combined together, but the two-component type is preferable from the viewpoint of storage stability.

In the two-component type thermally conductive composition, a mass ratio of the second agent to the first agent (the second agent / the first agent) is preferably 1 or a value close to 1, specifically, preferably 0.9 to 1.1, more preferably 0.95 to 1.05. In this way, setting the mass ratio of the second agent to the first agent at 1 or the value close to 1 facilitates preparation of the thermally conductive composition. In addition, in the two-component type thermally conductive composition, a viscosity ratio of the second agent to the first agent (the second agent / the first agent) is also preferably 1 or a value close to 1, specifically, preferably 0.5 to 2.0, more preferably 0.8 to 1.2. In this way, setting the viscosity ratio of the second agent to the first agent at 1 or the value close to 1 facilitates uniform mixture of the thermally conductive composition. Methods for adjusting the mass ratio and the viscosity ratio will be described later.

When using the addition reaction-curable silicone including the above alkenyl group-containing organopolysiloxane (base agent) and the hydrogenorganopolysiloxane (curing agent), the two-component thermally conductive composition is more specifically one in which the first agent includes the alkenyl group-containing organopolysiloxane (base agent) and the second agent includes the hydrogeneorganopolysiloxane (curing agent).

It is preferable that the addition reaction catalyst is included in the first agent and not in the second agent. Doing so provides the first agent and the second agent with excellent storage stability before mixing and accelerated reaction after the mixing, to be cured quickly, thus being able to make various properties of the thermally conductive member obtained by curing good. A factor therefor is not certain, but it is inferred that the addition reaction catalyst such as a platinum catalyst falls into a state where it is coordinated to the alkenyl group, which is an addition reaction site of the base agent, and the curing proceeds easily.

The thermally conductive filler should be included in at least any one of the first agent and the second agent, but is preferably included in both the first agent and the second agent. When the thermally conductive filler is included in both the first agent and the second agent, it becomes easy to mix the first agent and the second agent. In addition, since the mass ratio and the viscosity ratio of the second agent to the first agent can be set at 1 or the values close to 1 when preparing the thermally conductive composition, making it easier to use as the two-component type.

In addition, it is preferable that the second agent includes the alkenyl group-containing organopolysiloxane. Including the alkenyl group-containing organopolysiloxane that is the base agent in addition to the hydrogenorganopolysiloxane that is the curing agent in the second agent makes it easier to adjust the mass ratio and the viscosity ratio of the second agent to the first agent to 1 or close to 1 when producing the thermal conductive composition. On the other hand, the first agent should not include the hydrogeneorganopolysiloxane that is the curing agent.

### [Thermally Conductive Member]

The present invention can also provide the thermally conductive member comprising the silicone matrix, the thermally conductive filler, and the ester compound having 12 to 28 carbon atoms. The thermally conductive filler and the ester compound having 12 to 28 carbon atoms included in the thermally conductive member are as described above, and the silicone matrix is formed from the organopolysiloxane described above.

The thermally conductive member is solid, and is one obtained by the thermally conductive composition described above, and one obtained by curing the thermally conductive composition when the organopolysiloxane containing the reactive group is used as the organopolysiloxane. The thermally conductive composition of the present invention has low viscosity and thus excellent workability when obtaining the thermally conductive member. It is also easy to fill narrow gaps and is excellent in gap-filling properties. Furthermore, the thermally conductive member obtained from the thermally conductive composition of the present invention has excellent heat resistance and suppresses generation of the low-molecular weight siloxane.

Thermal conductivity of the thermally conductive member is preferably 1.0 W/m·K or more, more preferably 1.5 W/m·K or more, and even more preferably 2.0 W/m·K or more. Setting it at these lower limits or more provides favorable thermally conductive properties. Therefore, when it is used as, e.g., a gap filler in a battery cell module, it is possible to efficiently transfer heat generated from a battery cell to a module housing through the gap filler and to suppress an excessive increase in a temperature of the battery cell. The higher the thermal conductivity of the thermally conductive member is, the better it is, but for practical use, it is, e.g., 15 W/m·K or less. Herein, the thermal conductivity is measured in accordance with ASTM D5470.

### [Battery Module]

Uses of the thermally conductive member of the present invention are not limited, but the thermally conductive member can be used as the gap filler in the battery modules as follows.

A battery module according to the present invention comprises the gap filler composed of the thermally conductive member, a plurality of the battery cells, and the module housing for storing the plurality of the battery cells, the gap filler being arranged inside the module housing.

The gap filler composed of the thermally conductive member is filled between the battery cells themselves, and between the battery cells and the module housing, and the gap filler thus filled adheres to the battery cells and the module housing. Thereby, the gap filler between the battery cells has a function of keeping a clearance state between the battery cells. Further, the gap filler between the battery cells and the module housing has functions of adhering to both the battery cells and the module housing, and transferring the heat generated in the battery cells to the module housing.

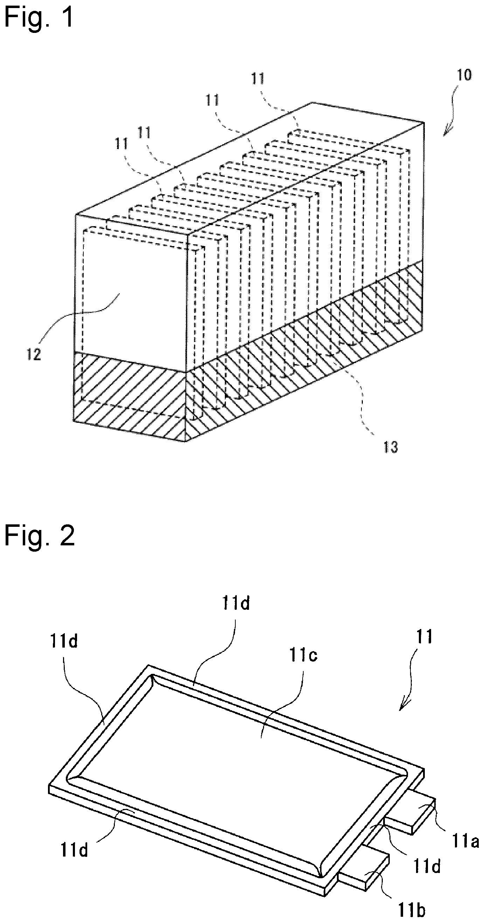

Fig. 1 shows a specific configuration of the battery module. Fig. 2 shows a specific configuration of each battery cell. As shown in Fig. 1, a plurality of battery cells 11 is arranged within a battery module 10. Each battery cell 11 is laminated and sealed in a flexible exterior film and has an overall shape of a flat body in which thickness is thin compared with magnitude of height or width. In such a battery cell 11, as shown in Fig. 2, a positive electrode 11a and a negative electrode 11b appear outside, and a central portion 11c of the flat surface is formed to be thicker than crimped end portions 11d.

As shown in Fig. 1, each of the battery cells 11 is arranged such that the flat surfaces thereof face each other. In the configuration of Fig. 1, a gap filler 13 is not filled such that the whole of the plurality of battery cells 11, which are stored in a module housing 12, are covered. The gap filler 13 is filled so as to fill gaps present in a part (a bottom-side part) of the inside of the module housing 12. The gap filler 13 is filled between the battery cells 11 each other, between the battery cell 11 and the module housing 12, and adheres to the surfaces of the battery cells 11 and the inner surfaces of the module housing 12 in this part.

The gap filler 13 filled between the battery cells 11 each other is adhered to the surfaces of both of battery cells 11, but the gap filler 13 itself has moderate elasticity and softness, which makes it possible to mitigate distortion and deformation caused by an external force even if the external force is applied to displace a spacing between the battery cells 11 each other. Therefore, the gap filler 13 has the function of keeping the clearance state between the battery cells 11 each other.

The gap filler 13 filled into the gap between the battery cell 11 and the inner surface of the module housing 12 also closely adheres to the surfaces of the battery cell 11 and the inner surface of the module housing 12. As a result, the heat generated in the inside of the battery cell 11 is transferred through the gap filler 13 adhering to the surface of the battery cell 11 to the inner surface of the module housing 12 closely adhering to the other surface of the gap filler 13.

Formation of the gap filler 13 into the battery module 10 should be done by applying a liquid thermally conductive composition using a general dispenser and then curing the liquid thermally conductive composition. The thermally conductive composition of the present invention has low viscosity and thus excellent workability when applying it.

On this occasion, it is preferable that the two-component type thermally conductive composition is used as described above. The two-component type is easy to be stored, and if mixed just before use, it is difficult to cure during an operation of applying with the dispenser and can be cured quickly after application. In addition, the application with the dispenser is also preferable in that it allows the liquid thermally conductive composition to fill relatively deep into the housing 12 of the battery module 10.

It is preferable that the gap filler 13 covering the battery cells 11 covers 20 to 40% of each battery cell 11 on one side of the battery cells 11. The coverage of 20% or more provides stable holding of the battery cells 11. In addition, sufficient coverage of the battery cells generating a large amount of heat provides favorable heat dissipation efficiency. On the other hand, the coverage of 40% or less provides efficient dissipation of the heat generated from the battery cells 11, and also prevents an increase in weight and deterioration of workability, and the like. In addition, in order to improve the heat dissipation efficiency, it is preferable that the side of the battery cells 11 where the electrodes 11a, 11b are located is covered with the gap filler 13, and it is more preferable that the whole of the electrodes 11a, 11b is covered with the gap filler 13.

As described above, the battery module 10 allows the heat generated from the battery cells 11 to escape to the module housing 12 through the gap filler 13.

It is also preferable that the gap filler 13 is used for a battery pack provided with a plurality of the battery module 10 inside. The battery pack generally comprises the plurality of the battery modules 10 and a housing of the battery pack in which the plurality of the battery module 10 is stored. In the battery pack, the gap filler 13 can be provided between the battery module 10 and the battery pack housing. This allows the heat that is escaped into the module housing 12 as described above to be further escaped to the housing of the battery pack, thereby enabling effective heat dissipation.

In addition, since the thermally conductive member of the present invention is used for the gap filler 13, it has excellent workability when forming the gap filler 13. Furthermore, since the gap filler 13 is excellent in the heat resistance and the generation of the low-molecular weight siloxane is suppressed, occurrence of electrical troubles caused by the low-molecular weight siloxane is prevented.

### Examples

Hereinafter, the present invention will be described in more detail with reference to examples, but the present invention is not limited to these examples.

### [Heat Resistance]

The heat resistance of the thermally conductive composition in each of Examples and Comparative Examples was evaluated based on a boiling point of the ester compound used as follows. A heat resistance evaluation was performed based on three-stage scores of 5, 3, and 1, with a higher score indicating more excellent heat resistance.

### (Heat Resistance Evaluation)

5: the boiling point was 300°C or more;
3: the boiling point was 200°C or more and less than 300°C; and
1: the boiling point was less than 200°C.

### [Viscosity]

The viscosity of the thermally conductive composition in each of Examples and Comparative Examples was measured as follows.

On a sample of the thermally conductive composition immediately after preparation (immediately after mixing the first agent and the second agent), measurement was performed by using a viscometer ("DV2T (spindle SC4-14)" produced by Brookfield Engineering) at 25°C for 120 seconds at 10 rpm of a rotation speed, and the average value of 90 to 120 seconds was used as a measurement value. Further, at a condition of 1 rpm of a rotation speed, too, the viscosity was measured in the same manner.

Based on the viscosity values measured at the condition of 10 rpm of a rotation speed, the relative viscosity was calculated by using the following expression, and a viscosity evaluation was performed according to the following criteria. Herein, the viscosity evaluation was performed based on 5-stage scores of 5, 4, 3, 2, and 1, with a higher score indicating a higher viscosity lowering effect by blending the ester compound. Relative Viscosity (%) = 100 × [(Viscosity of Thermally Conductive Composition in each of Examples and Comparative Examples) / (Viscosity of Thermally Conductive Composition of Comparative Example 1)]

### (Viscosity Evaluation)

5: the relative viscosity was less than 30%;
4: the relative viscosity was 30% or more and less than 40%;
3: the relative viscosity was 40% or more and less than 50%;
2: the relative viscosity was 50% or more and less than 60%; and
1: the relative viscosity was 60% or more.

### [Compatibility]

The compatibility of samples mixed with the organopolysiloxane and the ester compounds used in each of Examples and Comparative Examples at a blending amount ratio shown in each of Examples and Comparative Examples was evaluated visually according to the following criteria.

### (Compatibility of Samples)

5: the sample was transparent;
3: the sample was slightly cloudy and its transparency was slightly reduced; and
1: the sample was cloudy.

### (Compatible Limit Concentration)

To 100 parts by mass of the organopolysiloxane, 10 parts by mass of the ester compound used in each of Examples and Comparative Examples was added to make a mixture, and then the ester compound was added to the mixture in increments of 10 parts by mass until a total of 50 parts by mass was added. In doing so, an amount that is 10 parts by mass less than the amount of the ester compound blended at which the mixture begins to become cloudy (i.e., an amount added that is able to maintain transparency) was set as the compatible limit concentration and evaluated according to the following criteria. If the mixture was transparent when 50 parts by mass of the ester compound was added, the compatible limit concentration was set to 50 parts or more.

### (Compatibility Evaluation)

The compatibility was evaluated as follows based on the compatible limit concentration measured by the method described above. Herein, a compatibility evaluation was performed based on 5-stage scores of 5, 4, 3, 2, and 1, with a higher score indicating a better compatibility.
5: the compatible limit concentration was 50 parts by mass or more;
4: the compatible limit concentration was 40 parts by mass or more and less than 50 parts by mass;
3: the compatible limit concentration was 30 parts by mass or more and less than 40 parts by mass;
2: the compatible limit concentration was 20 parts by mass or more and less than 30 parts by mass; and
1: the compatible limit concentration was 10 parts by mass or more and less than 20 parts by mass.

### [Comprehensive Evaluation]

The lowest score in the heat resistance evaluation, the viscosity evaluation, and the compatibility evaluation described above was used as the comprehensive evaluation.

### [Example 1]

As shown in Table 2, with a type of the ester compound as methyl laurate, on the thermally conductive compositions having a composition of Blend 1 in shown below, the various evaluations described above were performed.

### <Blend 1>

Blend 1 is a two-component blend of the first agent and the second agent, as shown in Table 1.

Silicone A (400 cs in viscosity at 25°C) includes the alkenyl group-containing organopolysiloxane and a small amount of the addition reaction catalyst (platinum catalyst).

Silicone B (300 cs in viscosity at 25°C) includes the alkenyl group-containing organopolysiloxane and the hydrogeneorganopolysiloxane.

The first agent is composed of 100 parts by mass of Silicone A, 30 parts by mass of the ester compound, 1.5 parts by mass of the decyltrimethoxysilane, 200 parts by mass of aluminum oxide having an average particle size of 45 µm, 150 parts by mass of aluminum hydroxide having an average particle size of 1 µm, 200 parts by mass of aluminum hydroxide having an average particle size of 10 µm, 400 parts by mass of aluminum hydroxide having an average particle size of 90 µm.

The second agent is composed of 100 parts by mass of Silicone B, 30 parts by mass of the ester compound, 1.5 parts by mass of the decyltrimethoxysilane, 200 parts by mass of the aluminum oxide having an average particle size of 45 µm, 150 parts by mass of the aluminum hydroxide having an average particle size of 1 µm, 200 parts by mass of the aluminum hydroxide having an average particle size of 10 µm, and 400 parts by mass of the aluminum hydroxide having an average particle size of 90 µm.

The thermally conductive compositions were prepared by mixing these first and second agents.

Each of thermally conductive compositions having the compositions of Blend 1 to Blend 4 shown in Table 1 was in a liquid form at 25°C.

### [Examples 2 to 12, Comparative Example 4]

Thermally conductive compositions were obtained in the same manner as in Example 1, except that the ester compound used in Example 1 was changed to those listed in Tables 2 to 4.

### [Comparative Example 1]

A thermally conductive composition (thermally conductive composition of Blend 2 shown in Table 1) was obtained in the same manner as in Example 1, except that the ester compound was not used.

### [Comparative Example 2]

A thermally conductive composition (thermally conductive composition of Blend 3 shown in Table 1) was obtained in the same manner as in Example 1, except that 30 parts by mass of n-decyltrimethoxysilane was used in place of the ester compound.

### [Comparative Example 3]

A thermally conductive composition (thermally conductive composition of Blend 4 shown in Table 1) was obtained in the same manner as in Example 1, except that 30 parts by mass of a dimethyl silicone oil (10 cs in the viscosity at 25°C) was used in place of the ester compound.

**Table 1**

| | | | Blend 1 | | Blend 2 | | Blend 3 | | Blend 4 | |
|---|---|---|---|---|---|---|---|---|---|---|
| | | | First agent | Second agent | First agent | Second agent | First agent | Second agent | First agent | Second agent |
| Organopolysiloxane | Silicone A | Parts by mass | 100 | | 100 | | 100 | | 100 | |
| | Silicone B | | | 100 | | 100 | | 100 | | 100 |
| Ester compound | | | 30 | 30 | | | | | | |
| Dimethyl silicone oil | | | | | | | | | 30 | 30 |
| n-Decyltrimethoxysilane | | | 1.5 | 1.5 | 1.5 | 1.5 | 31.5 | 31.5 | 1.5 | 1.5 |
| thermally conductive filler | Aluminum oxide (spherical, 45 µm) | | 200 | 200 | 200 | 200 | 200 | 200 | 1.5 | 200 |
| | Aluminum hydroxide (irregular form, 1 µm) | | 150 | 150 | 150 | 150 | 150 | 150 | 150 | 150 |
| | Aluminum hydroxide (irregular form, 10 µm) | | 200 | 200 | 200 | 200 | 200 | 200 | 200 | 200 |
| | Aluminum hydroxide (irregular form, 90 µm) | | 400 | 400 | 400 | 400 | 400 | 400 | 400 | 400 |

**Table 2**

| | | Example 1 | Example 2 | Example 3 | Example 4 | Example 5 | Example 6 |
|---|---|---|---|---|---|---|---|
| | | Blend 1 | Blend 1 | Blend 1 | Blend 1 | Blend 1 | Blend 1 |
| Type of ester compound | | Methyl laurate | Isopropyl my ristate | Isopropyl palmitate | Octyl laurate | 1-Methylheptyl laurate | 1-MethylheptyI myristate |
| Comparative compound used in place of ester compound | | - | - | - | - | - | - |
| Amount of the above compound blended (parts by mass) | | 30 | 30 | 30 | 30 | 30 | 30 |
| Details of ester compound (Formula (1)) | Total number of carbon atoms | 13 | 17 | 19 | 20 | 20 | 22 |
| | R¹ | 11 | 13 | 15 | 11 | 11 | 13 |
| | R² | 1 | 3 | 3 | 8 | 8 | 8 |
| | Molecular weight | 214 | 270 | 298 | 312 | 312 | 340 |
| Heat resistance | | 3 | 5 | 5 | 5 | 5 | 5 |
| Viscosity properties | 25°C 1 rpm [Pa.s] | 390 | 400 | 423 | 450 | 440 | 440 |
| | 25°C 10 rpm [Pa.s] | 82 | 86 | 89 | 96 | 94 | 96 |
| | Relative viscosity | 24.8% | 26.1% | 26.9% | 29.1% | 28.5% | 29.1% |
| | Viscosity evaluation | 5 | 5 | 5 | 5 | 5 | 5 |
| Properties of compatibility | Compatibility of sample | 5 | 5 | 5 | 5 | 5 | 5 |
| | Compatible limit concentration of ester compound | 50 parts by mass or more | 50 parts by mass or more | 50 parts by mass or more | 50 parts by mass or more | 50 parts by mass or more | 50 parts by mass or more |
| | Evaluation of compatibility | 5 | 5 | 5 | 5 | 5 | 5 |
| Comprehensive evaluation | | 3 | 5 | 5 | 5 | 5 | 5 |

**Table 3**

| | | Example 7 | Example 8 | Example 9 | Example 10 | Example 11 | Example 12 |
|---|---|---|---|---|---|---|---|
| | | Blend 1 | Blend 1 | Blend 1 | Blend 1 | Blend 1 | Blend 1 |
| Type of ester compound | | 2-Ethylhexyl palmitate | 1-Methylheptyl palmitate | 1-Methylheptyl isostearate | 2-Ethylhexyl stearate | Decyl isostearate | Cetyl 2-ethylhexanoate |
| Comparative compound used in place of ester compound | | - | - | - | - | - | - |
| Amount of the above compound blended (parts by mass) | | 30 | 30 | 30 | 30 | 30 | 30 |
| Details of ester compound (Formula (1)) | Total number of carbon atoms | 24 | 24 | 26 | 26 | 28 | 24 |
| | R¹ | 15 | 15 | 17 | 17 | 17 | 7 |
| | R² | 8 | 8 | 8 | 8 | 10 | 16 |
| | Molecular weight | 368 | 368 | 396 | 396 | 424 | 368 |
| Heat resistance | | 5 | 5 | 5 | 5 | 5 | 5 |
| Viscosity properties | 25°C 1 rpm [Pa.s] | 431 | 470 | 480 | 640 | 280 | 440 |
| | 25°C 10 rpm [Pa.s] | 95 | 101 | 105 | 137 | 113 | 100 |
| | Relative viscosity | 28.9% | 30.6% | 31.8% | 41.5% | 34.2% | 30.3% |
| | Viscosity evaluation | 5 | 4 | 4 | 3 | 4 | 4 |
| Properties of compatibility | Compatibility of sample | 5 | 5 | 5 | 5 | 3 | 5 |
| | Compatible limit concentration of ester compound | 40 parts by mass | 40 parts by mass | 40 parts by mass | 30 parts by mass | 20 parts by mass | 50 parts by mass or more |
| | Evaluation of compatibility | 4 | 4 | 4 | 3 | 2 | 5 |
| Comprehensive evaluation | | 4 | 4 | 4 | 3 | 2 | 4 |

**Table 4**

| | | Comparative Example 1 | Comparative Example 2 | Comparative Example 3 | Comparative Example 4 |
|---|---|---|---|---|---|
| | | Blend 2 | Blend 3 | Blend 4 | Blend 1 |
| Type of ester compound | | - | - | - | 2-Hexyldecyl myristate |
| Comparative compound used in place of ester compound | | - | n-Decyltomethoxysilane | Dimethyl silicone oil (10 CS) | |
| Amount of the above compound blended (parts by mass) | | 0 | 30 | 30 | 30 |
| Details of ester compound (Formula (1)) | Total number of carbon atoms | - | - | - | 30 |
| | R¹ | - | - | - | 13 |
| | R² | - | - | - | 16 |
| | Molecular weight | - | 262 | - | 452 |
| Heat resistance | | 5 | 1 | - | 5 |
| Viscosity properties | 25°C 1 rpm [Pa.s] | 1318 | 398 | 400 | 1060 |
| | 25°C 10 rpm [Pa.s] | 330 | 82 | 80 | 207 |
| | Relative viscosity | 100.0% | 24.9% | 24.2% | 627% |
| | Viscosity evaluation | 1 | 5 | 5 | 1 |
| Properties of compatibility | Compatibility of sample | - | 5 | 5 | 1 |
| | Compatible limit concentration of ester compound | - | 50 parts by mass or more | 50 parts by mass or more | 10 parts by mass |
| | Evaluation of compatibility | - | 5 | 5 | 1 |
| Comprehensive evaluation | | 1 | 1 | - | 1 |

From the result of each Example, it was found that the thermally conductive compositions of the present invention including the ester compound having 12 to 28 carbon atoms had excellent heat resistance, good compatibility with the organopolysiloxane, and low viscosity. In particular, the use of the ester compounds having 17 to 22 carbon atoms allowed the high effects of the present invention, and particularly excellent results in the comprehensive evaluation.

In addition, the thermally conductive composition of each Example used the ester compound to lower the viscosity but did not use the low viscosity silicone oil, thereby suppressing the generation of the low-molecular weight siloxane.

In contrast, the thermally conductive composition of Comparative Example 1 did not include the ester compound having 12 to 28 carbon atoms, resulting in high viscosity and in poor workability.

The thermally conductive composition of Comparative Example 2 was an example in which the n-decyltrimethoxysilane was used in place of the ester compound, and although the viscosity was lowered, the heat resistance deteriorated.

The thermally conductive composition of Comparative Example 3 was an example in which the dimethyl silicone oil was used in place of the ester compound, and although the viscosity was lowered, the low-molecular weight siloxane was generated during heating, and troubles caused by the low-molecular weight siloxane were likely to occur.

The thermally conductive composition of Comparative Example 4 was an example in which an ester compound having carbon atoms exceeding 28 was used, but it was less effective in lowering the viscosity and inferior in the workability compared with the thermally conductive compositions of Examples.

### Reference Signs List

- 10: battery module
- 11: battery cell
- 12: housing of battery module (module housing)
- 13: gap filler

## Claims

1. A thermally conductive composition in a liquid form at 25°C comprising an organopolysiloxane, a thermally conductive filler, and an ester compound having 12 to 28 carbon atoms.

2. The thermally conductive composition according to claim 1, wherein the ester compound is a monoester in a liquid form at 25°C.

3. The thermally conductive composition according to claim 1 or 2, wherein the ester compound is represented by the following Formula (1): 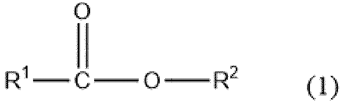 wherein R¹ and R² are alkyl groups, and at least one of R¹ and R² is an alkyl group having 10 or more carbon atoms.

4. The thermally conductive composition according to any one of claims 1 to 3, wherein the organopolysiloxane is an organopolysiloxane containing a reactive group.

5. The thermally conductive composition according to claim 4, wherein the organopolysiloxane containing the reactive group is an addition reaction-curable silicone comprising an alkenyl group-containing organopolysiloxane and a hydrogenorganopolysiloxane.

6. The thermally conductive composition according to any one of claims 1 to 5, wherein the thermally conductive composition has a viscosity of 1 to 500 Pa·s.

7. A thermally conductive member comprising a silicone matrix, a thermally conductive filler, and an ester compound having 12 to 28 carbon atoms.

8. A battery module comprising a gap filler composed of the thermally conductive member according to claim 7, a plurality of battery cells, and a module housing for storing the plurality of the battery cells, wherein the gap filler is arranged inside the module housing.
